# EUROPÄISCHE PATENTSCHRIFT

(11) **EP 2 217 540 B1**
(45) Veröffentlichungstag und Bekanntmachung des Hinweises auf die Patenterteilung: **15.07.2015**
(21) Anmeldenummer: 08856787.0
(22) Anmeldetag: 18.11.2008
(51) Int. Cl.: C03C 17/00, C03C 17/04, B41M 7/00, B41M 1/12, B41M 3/00, B41M 1/34

(54) **VERFAHREN ZUR HERSTELLUNG EINER ERHABENEN MARKIERUNG AUF EINEM GLASGEGENSTAND**
METHOD FOR PRODUCING RAISED MARKING ON A GLASS OBJECT
PROCÉDÉ DE FABRICATION D'UN MARQUAGE EN RELIEF SUR UN OBJET EN VERRE

(30) Priorität: 03.12.2007 DE 102007058360
(43) Veröffentlichungstag der Anmeldung: 18.08.2010
(73) Patentinhaber: Heraeus Quarzglas GmbH & Co. KG, 63450 Hanau (DE)
(72) Erfinder: WEBER, Juergen, 63801 Kleinostheim (DE); TRAEGER, Norbert, 63477 Maintal (DE); BRAEMER, Thilo, 63486 Bruchkoebel (DE); WERDECKER, Waltraud, 63456 Hanau am Main (DE); KARA, Maximilian, 63906 Erlenbach (DE)
(74) Vertreter: Staudt, Armin Walter
(86) Internationale Anmeldenummer: PCT/EP2008/065724
(87) Internationale Veröffentlichungsnummer: WO 2009/071441

(56) Entgegenhaltungen:
- DE-A1- 10 114 484
- DE-A1-102005 058 819
- DE-A1-102006 046 619
- S. J. MILNE, M. PATEL, E. DICKINSON: "Experimental studies of particle packing and sintering behaviour of monosize and bimodal spherical silica powders" JOURNAL OF THE EUROPEAN CERAMIC SOCIETY, Bd. 11, 1993, Seiten 1-7, XP022785422

## Beschreibung

Die Erfindung betrifft ein Verfahren zur Herstellung einer erhabenen Markierung auf einem Glasgegenstand, indem eine SiO₂-Teilchen enthaltende Suspension auf einer Oberfläche des Glasgegenstandes als Muster aufgetragen, und das Muster unter Bildung der Markierung verdichtet wird.

### Stand der Technik

Das Aufbringen einer Schicht auf einem Glasgegenstand für Dekorations- und Markierungszwecke ist allgemein bekannt. Häufig handelt es sich um Einbrennfarben aus Emaille, die mittels Siebdruckverfahren aufgebracht werden. Auch Methoden, bei denen das Muster mittels eines flächigen Trägermaterials auf die Glasoberfläche übertragen und anschließend eingebrannt wird, sind gebräuchlich. Die so erzeugten Oberflächenschichten sind dünn und zur Herstellung erhabener Strukturen nicht geeignet.

Aus der DE 1 596 666 A ist ein Verfahren der eingangs genannten Gattung bekannt. Darin wird zur Herstellung einer Glasplatte mit Reliefstruktur vorgeschlagen, eine Aufschlämmung aus einem Quarzpulver und einem Bindemittel auf der Plattenoberfläche streifenweise aufzutragen, und die erzeugten Streifen anschließend bei einer Temperatur von 630 °C einzuschmelzen. Als Bindemittel werden Kienöl oder Natriumsilikat verwendet.

Das Bindemittel enthält Substanzen, die bei Anwendungen des Glasgegenstandes bei hoher Temperatur oder in verunreinigungssensitiver Umgebung zu inakzeptablen Veränderungen des Glasgegenstandes selbst oder der ihn umgebenden Werkstoffe führen. Für derartige Anwendungen - wie etwa in der Halbleiterfabrikation - werden häufig Bauteile aus Quarzglas eingesetzt. Das bekannte Mar-Markierungsverfahren würde hier zu einer Entglasung bei hoher Temperatur oder zu einer Veränderung der elektrischen Eigenschaften eines benachbarten Halbleitermaterials infolge einer Kontamination durch Natrium führen.

Daher wurden Markierungen - wie etwa Seriennummern - auf Bauteilen aus Quarzglas für den Einsatz bei hoher Temperatur bisher erzeugt, indem ein Quarzglasstrang auf der Oberfläche in Form der Markierung manuell aufgelegt und sukzessive verschweißt wird. Diese Verfahrensweise ist jedoch zeitaufwändig und für Markierungen mit einheitlichem Erscheinungsbild ungeeignet.

Bei dem aus der DE 100 09 185 A1 bekannten Verfahren zur Herstellung eines Reliefdekors auf einem Substrat werden reliefbildende Formlinge aus Glasfritte und Farbpigmenten erzeugt, auf der Substrat-Oberfläche aufgelegt und durch keramischen Brand fixiert.

Die EP 1 614 664 A1 beschreibt ein Verfahren zum Einfärben eines Reliefglases. Dabei wird auf einem Glassubstrat Glassfritte sowie ein Farbpigment mit höherer Erweichungstemperatur als Glasfritte und Glassubstrat mittels einer Drucktechnik aufgebracht. Beim Erweichen des Glassubstrats in einer Relief-Schmelzform wird das Farbpigment eingebrannt.

Aus der DE 10 2005 058 819 A1 ist ein Verfahren zur Herstellung einer reflektierenden Beschichtung auf einem Quarzglas-Bauteil bekannt, indem ein mit einem SiO₂-haltigen Schlicker getränktes Quarzglasvlies auf die Bauteil-Oberfläche aufgelegt, getrocknet und verglast wird. Die SiO₂-Teilchen des dafür eingesetzten Schlickers zeigen eine Teilchengrößenverteilung mit einem D₅₀-Wert um 8 µm und einem D₉₀-Wert um 40 µm.

### Technische Aufgabe

Der vorliegenden Erfindung liegt daher die Aufgabe zugrunde, ein Verfahren anzugeben, das eine kostengünstige Herstellung einer optisch ansprechenden und einheitlichen Markierung auf einem Gegenstand aus Quarzglas ermöglicht, die auch für Anwendungen bei hoher Temperatur oder in verunreinigungssensitiver Umgebung - wie etwa bei der Halbleiterherstellung - geeignet ist.

Dies Aufgabe wird ausgehend von einem Verfahren der eingangs genannten Gattung erfindungsgemäß dadurch gelöst, dass zur Erzeugung einer Markierung auf einem Quarzglas-Gegenstand eine bindemittelfreie Suspension eingesetzt wird, die eine Dispersionsflüssigkeit und amorphe SiO₂-Teilchen mit Teilchengrößen bis maximal 500 µm enthält, davon zwischen 0,2 Gew.-% und 15 Gew.-% SiO₂-Nanoteilchen mit Teilchengrößen von weniger als 100 nm, und deren aus dem Gewichtsanteil der SiO₂-Teilchen und dem der SiO₂-Nanoteilchen zusammen bestehender Feststoffgehalt im Bereich zwischen 60 und 90 % liegt.

Beim erfindungsgemäßen Verfahren wird zur Herstellung des Musters eine Suspension eingesetzt, die frei von Bindemitteln ist. Bestandteile herkömmlicher Bindemittel, wie Alkali- und Erdalkali-Verbindungen, die zu einer Verringerung der Viskosität von Quarzglas und zu einer Entglasung des Quarzglas-Gegenstandes führen können, werden so vermieden.

Der Feststoffgehalt (das ist der Gewichtsanteil der SiO₂-Teilchen und der SiO₂-Nanoteilchen zusammen) der Suspension ist mit einem Wert zwischen 60 % und 90 % relativ hoch. Der hohe Feststoffgehalt bewirkt eine hohe "Grünkörperdichte" der aufgetragenen Musters und trägt so zu einer gleichmäßigen und geringen Schwindung der aufgetragenen Schicht bei, so dass die Gefahr von Trocknungs- und Sinterrissen vermindert wird.

Andererseits sind derartige hochgefüllte SiO₂-haltige Suspensionen in der Regel hochviskos und zeigen typischerweise ein dilatant-rheopexes Fließverhalten. Das bedeutet, dass die Suspension bei mechanischer Einwirkung (wie Rühren, Schütteln, Spachteln, Aufstreichen, Abstreifen, Rakeln, Aufsprühen) eine höhere Viskosität aufweist (Dilatanz), oder dass die Viskosität nach einer mechanischen Einwirkung kurzzeitig erhöht ist (Rheopexie).

Dieses Fließverhalten erweist sich jedoch als nachteilig, wenn die Suspension auf die Oberfläche des Quarzglas-Gegenstandes durch Aufsprühen oder Aufstreichen (auch: Abstreifen, Aufziehen, Abziehen, Schaben, Aufspachteln) aufgetragen werden soll. Für diese Auftragstechniken ist eine hochviskose Suspension nicht geeignet, da sie sich unter der Einwirkung der verteilenden Kraft verfestigt und daher ihrer gleichmäßigen Verteilung entgegenwirkt. Im Ruhezustand kann sie sich aber wieder verflüssigen, so dass sich die auf der Oberfläche aufgebrachten Musterlinien verbreitern und verwaschen.

Es hat sich gezeigt, dass das Fließverhalten einer dilatant-rheopexen Suspension durch den Zusatz einer geringen Menge von SiO₂-Nanoteilchen in Richtung eines eher strukturviskos-thixotropen Verhaltens verändert wird. Die "Thixotropie" einer Suspension zeigt sich darin, dass ihre Viskosität bei konstanter Scherbeanspruchung (etwa bei konstanter Rührgeschwindigkeit) über eine gewisse Zeit stetig abnimmt. Damit verwandt ist die "Strukturviskosität", bei der die Viskosität durch Scherung ebenfalls verringert wird, sich bei konstanter Scherbeanspruchung jedoch nicht weiter abbaut.

Erfindungsgemäß enthält die Suspension daher zwischen 0,2 Gew.-% und 15 Gew.-% an SiO₂-Nanoteilchen mit Teilchengrößen von weniger als 100 nm. Unter SiO₂-Nanoteilchen werden hier SiO₂-Teilchen mit Teilchengrößen im Bereich einiger Nanometer bis 100 nm, vorzugsweise unterhalb von 50 nm verstanden. Derartige Nanoteilchen haben eine spezifische Oberfläche nach BET von 40 bis 800 m²/g, bevorzugt zwischen 55 und 200 m²/g. Die SiO₂-Nanoteilchen können zum Beispiel durch Oxidation oder Hydrolyse siliziumhaltiger Ausgangsverbindungen hergestellt werden (im Folgenden auch als "pyrogene Kieselsäure" bezeichnet) oder durch Polykondensation polymerisierbarer Siliziumverbindungen (SiO₂-Sol).

Die SiO₂-Nanoteilchen erzeugen Wechselwirkungen zwischen den amorphen SiO₂-Teilchen der Suspension insgesamt und bewirken die Ausbildung physikalischer oder chemischer Bindungen zwischen den amorphen SiO₂-Teilchen untereinander. Beim Auftreten von Scherkäften lassen diese Wechselwirkungen nach, was zu einer "Verflüssigung" der Suspension führt. Nach dem Wegfall der Scherkräfte - im Ruhezustand der Suspensionsmasse - verstärken sich die Wechselwirkungen wieder und stabilisieren so die ruhende Suspensionsmasse.

Zum Auftragen der Suspension sind die bekannten Auftragstechniken geeignet, insbesondere auch das Abziehen von einem Träger, auf dem ein Abbild des Musters vorhanden ist (Abziehbild), wobei hierbei eine Suspension mit besonders hohem Feststoffgehalt bevorzugt ist. Es wird jedoch eine Verfahrensvariante besonders bevorzugt, bei der die Suspension durch Aufsprühen oder Aufstreichen aufgetragen wird.

Wegen ihres strukturviskos-thixotropen Fließverhaltens verflüssigt sich die beim erfindungsgemäßen Verfahren eingesetzte Suspension unter Scherbeanspruchung. Diese Eigenschaft begünstigt ein gleichmäßiges Ausfließen und die Verteilung der Suspensionsmasse auf der Oberfläche unter Einwirkung einer verteilend wirkenden Kraft, wie beim Aufstreichen oder Aufsprühen, und gewährleistet andererseits eine rasche Stabilisierung der in Flächen und Linien des zu erzeugenden Musters aufgetragenen Suspension.

Bei sehr hohen Feststoffgehalten von mehr als 90 % nimmt die Verarbeitbarkeit der Suspension durch Sprühen und Aufstreichen jedoch deutlich ab, auch wenn die Suspension mit SiO₂-Nanoteilchen versetzt ist. Bei einem Gehalt von weniger als 0,2 Gew.-% wirken sich die Nanoteilchen auf das Fließverhalten der Suspension nicht nennenswert aus, wohingegen Gehalte von mehr als 15 Gew.-% zu einer verstärkten Schrumpfung des Musters beim Trocknen führen können. Bei sehr dünnen Schichten (< 0,1 mm) kann ein höherer Gehalt an SiO₂-Nanoteilchen eingesetzt werden, da dünne Schichten hinsichtlich Schwindungsrissen weniger anfällig sind als dickere Schichten.

Im Hinblick hierauf hat es sich als besonders günstig erwiesen, wenn die Suspension SiO₂-Nanoteilchen zwischen 0,5 und 5 Gew.-%, bevorzugt zwischen 1 und 3 Gew.-%, enthält (bezogen auf den gesamten Feststoffgehalt).

Bei einer bevorzugten Verfahrensvariante ist vorgesehen, dass die Markierung in Bezug auf den Quarzglas-Gegenstand aus arteigenem Material besteht.

Unter einem "arteigenen Material" wird hier verstanden, dass sich die SiO₂-Gehalte von Markierung und Quarzglas-Gegenstand um maximal 3 Gew.-% voneinander unterscheiden. Dadurch wird eine besonders gute Haftung der Markierung auf dem Gegenstand erreicht und eine hohe Temperaturwechselbeständigkeit dieses Verbundes gewährleistet.

Je nach Vorgabe ist die Markierung opak, transluzent oder vollkommen transparent. Durch eine geeignete Temperaturführung kann die Gefahr einer Rissbildung beim Verdichten des Musters vermindert werden. Das Verdichten erfolgt durch Sintern (beispielsweise in einem Ofen) oder durch Verglasen (beispielsweise mittels einer Flamme). Bei einer ersten bevorzugten Verfahrensvariante erfolgt das Verdichten des getrockneten Musters bei einer vergleichsweise niedrigen Maximaltemperatur im Bereich zwischen 1100 °C und 1600 °C, vorzugsweise unterhalb von 1450 °C.

Die niedrige Maximaltemperatur verhindert ein rasches Verdichten der äußeren Oberflächenbereiche des Musters beim Verdichten. Eine derartige Verdichtung würde infolge ihrer wärmeisolierenden Wirkung das weitere Fortschreiten einer Verglasungsfront behindern, und dadurch ein vollständiges Verdichten dickerer Schichten erschweren. Dabei wird in der Regel eine opake oder transluzent durchscheinende Markierung erhalten.

Alternativ dazu erfolgt das Verdichten des Musters bei einer Temperatur oberhalb von 1600 °C.

Hierdurch wird in der Regel eine Markierung aus transparentem Quarzglas erhalten.

Es hat sich bewährt, wenn das Auftragen der Suspension über eine Maske erfolgt, welche auf der Oberfläche aufgelegt wird und die das Muster vorgibt.

Die Maske erleichtert die Einhaltung eines einheitlichen Erscheinungsbildes des herzustellenden Musters.

Die Dicke der Markierung kann bis zu 1 mm betragen. Im Unterschied zum eingangs beschriebenen, herkömmlichen Verfahren erleichtert das erfindungsgemäße Verfahren aber auch die Herstellung besonders dünner Markierungsschichten, bevorzugt mit Schichtdicken im Bereich zwischen 0,1 und 0,5 mm.

Es hat sich bewährt, wenn zur Herstellung der Markierung eine Suspension eingesetzt wird, bei der SiO₂-Teilchen mit Teilchengrößen im Bereich zwischen 1 µm und 60 µm den größten Volumenanteil ausmachen, wobei die SiO₂-Teilchen eine mehrmodale Teilchengrößenverteilung mit einem ersten Maximum der Größenverteilung im Bereich von 1 bis 5 µm und einem zweiten Maximum im Bereich von 5 bis 50 µm aufweisen.

Die amorphen SiO₂-Teilchen weisen eine mehrmodale Teilchengrößenverteilung mit mindestens zwei, vorzugsweise drei und mehr Verteilungsmaxima auf. Dies erleichtert die Einstellung einer hohen Feststoffdichte in der Suspension, wodurch die Schrumpfung beim Trocknen und Verdichten und damit die Gefahr einer Rissbildung weiter vermindert wird.

Als besonders günstiger Kompromiss zwischen einem Muster mit geringer Neigung zur Rissbildung einerseits und einer leichten Verarbeitung der Suspension durch Sprühen und Aufstreichen andererseits hat es sich gezeigt, wenn die Suspension einen Feststoffgehalt im Bereich zwischen 70 und 80 Gew.-% aufweist. Besonders bevorzugt liegt der Feststoffgehalt bei mindestens 75 Gew.- %.

Es hat sich auch als besonders vorteilhaft erwiesen, wenn mindestens 80 Gew.-%, bevorzugt mindestens 90 Gew.-% der SiO₂-Teilchen sphärisch ausgebildet sind.

Sphärische Teilchen erleichtern die Einstellung einer hohen Feststoffdichte im Schlicker, so dass Spannungen beim Trocknen und Verdichten vermindert werden. Im Idealfall sind alle SiO₂-Teilchen sphärisch ausgebildet.

Vorzugsweise weisen die SiO₂-Teilchen eine Teilchengrößenverteilung auf, die durch einen D₅₀-Wert von weniger als 50 µm, vorzugsweise weniger als 40 µm, gekennzeichnet ist.

SiO₂-Teilchen in diesem Größenbereich zeigen ein vorteilhaftes Sinter- und Verglasungsverhalten und eine vergleichsweise geringe Trockenschwindung, so dass ein entsprechendes Muster besonders einfach ohne Rissbildung getrocknet und verdichtet werden kann.

Die Dispersionsflüssigkeit kann auf wässriger Basis bestehen. Die polare Natur der wässrigen Phase einer solchen Suspension kann sich auf die Wechselwirkung der SiO₂-Teilchen auswirken. Für die Suspension gemäß der Erfindung wird aber eine Dispersionsflüssigkeit in Form eines Gemischs aus Wasser und eines organischen Lösungsmittels, vorzugsweise auf alkoholischer Basis, eingesetzt.

Der wässrige Anteil der Dispersionsflüssigkeit erleichtert die Einhaltung eines thixotropen Fließverhaltens und die Einstellung einer gewünschten Viskosität. Der alkoholische Anteil der Dispersionsflüssigkeit beschleunigt das Trocknen - im Vergleich zu einer wässrigen Dispersion. Dies bringt eine Zeitersparnis mit sich und führt zu einer schnelleren Fixierung des Musters auf der Oberfläche des Quarzglas-Gegenstandes, so dass ein Auslaufen an den Rändern des Musters vermindert wird. Die Viskosität der Suspension einerseits und ihr Trocknungsverhalten andererseits sind somit durch Einstellen der Anteile von Wasser und organischem Lösungsmittel (Alkohol) optimierbar.

Vorzugsweise bestehen die SiO₂-Teilchen aus natürlich vorkommendem SiO₂-Rohstoff und die SiO₂-Nanoteilchen aus synthetischem SiO₂.

Natürlich vorkommender SiO₂-Rohstoff ist vergleichsweise preiswert und zeichnet sich durch hohe Viskosität aus. Synthetisches SiO₂ zeichnet sich durch eine hohe Reinheit aus.

Es hat sich als günstig erwiesen, wenn der SiO₂-Gehalt der amorphen SiO₂-Teilchen vorzugsweise mindestens 99,9 Gew.-% beträgt.

Der Feststoffanteil der unter Einsatz derartiger Teilchen hergestellten Suspension besteht zu mindestens 99,9 Gew.-% aus SiO₂ (abgesehen von Dotierstoffzugaben, wie etwa zur Einfärbung der Markierung). Bindemittel oder andere Zusatzstoffe sind nicht erforderlich und im Idealfall nicht enthalten. Die Markierung aus "arteigenem Material" zeigt eine besonders hohe Temperaturwechselbeständigkeit.

### Ausführungsbeispiel

Nachfolgend wird die Erfindung anhand von Ausführungsbeispielen und einer Zeichnung näher erläutert. In der Zeichnung zeigt im Einzelnen:
- **Figur 1**: Ein Diagramm der SiO₂-Teilchengrößenverteilung einer Rohstoffkomponente, die für die Herstellung einer Suspension zur Durchführung des erfindungsgemäßen Verfahrens geeignet ist. (vor dem Zusatz von SiO₂-Nanoteilchen), und
- **Figur 2**: ein Quarzglasrohr für den Einsatz als Reaktor in der Solarzellenfertigung, das mit einer Kennzeichnung in Form einer erhabenen Markierung versehen ist.

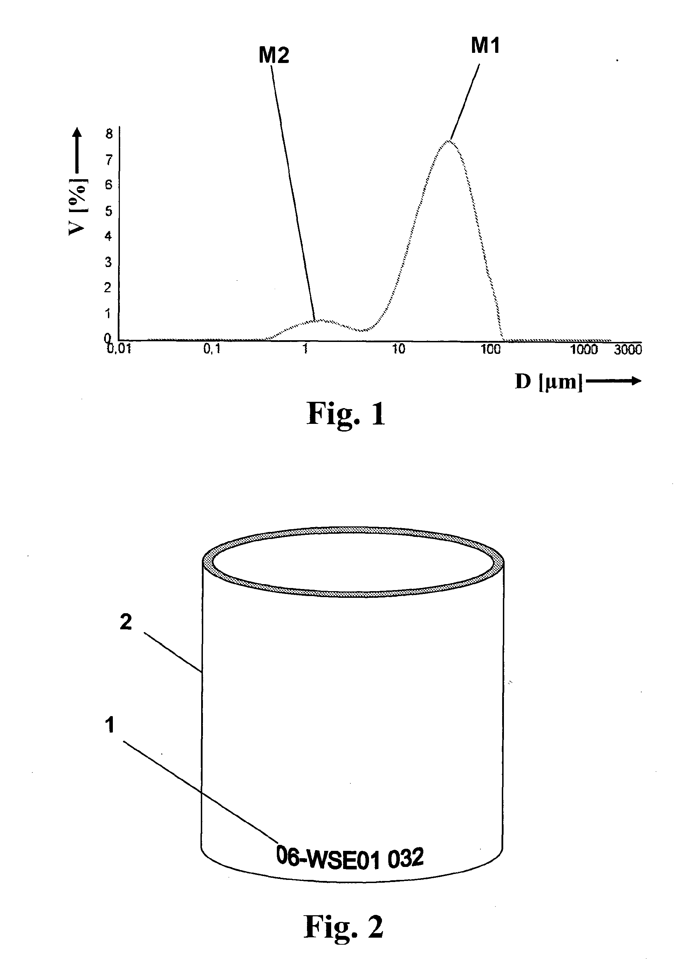

Das Diagramm von **Figur 1** zeigt eine Teilchengrößenverteilung eines Quarzglaspulvers, mit einem ersten Maximum M1 der Größenverteilung bei etwa 30 µm (D₅₀-Wert) und mit einem zweiten, kleineren Maximum M2 im Bereich um 2 µm. Das Quarzglaspulver (mit einem D₅₀-Wert bei 30 µm) wird im Folgenden als R₃₀ bezeichnet.

Für die Herstellung einer Suspension für die Erzeugung einer Markierung werden weitere Quarzglaspulver eingesetzt, die D₅₀-Werte bei 5 µm, 15 µm und 40 µm aufweisen und deren Teilchengrößenverteilungen ansonsten der in Figur 1 Gezeigten ähneln. Diese Quarzglaspulver werden je nach ihrem D₅₀-Wert mit R₅, R₁₅, beziehungsweise als R₄₀ bezeichnet.

Die Quarzglaspulver R₃₀, R₁₅ und R₅ werden in den Mengenanteilen 500 g; 200 g; 200 g (in der Reihenfolge ihrer Nennung) in einem Gemisch aus 70 Gew.-Anteilen Ethanol und 30 Gew.-Anteilen Reinstwasser dispergiert und homogenisiert. Dem homogenisierten Schlicker werden 135 g an pyrogener Kieselsäure in Form von SiO₂-Nanoteilchen mit Durchmessern um 40 nm mit einer BET-Oberfläche von 50 m²/g zugesetzt, so dass sich eine Suspension Feststoffgehalt von 75 Gew.-% ergibt.

Die Teilchengrößen unterhalb von 60 µm machen den größten Volumenanteil des Feststoffes aus. Die ausschließlich mit synthetisch hergestellten, hochreinen, sphärischen SiO₂-Partikeln erzeugte Suspension ist frei von kristallinen Bestandteilen (Cristobalit, Quarz) und zeichnet sich durch einen geringen Verunreinigungsgehalt von weniger als 1 Gew.-ppm aus. Die bindemittelfreie Suspension zeigt thixotropes Verhalten und ist für Verarbeitungstechniken wie Aufsprühen oder Aufstreichen besonders gut geeignet.

**Figur 2** zeigt schematisch eine unter Einsatz der Suspension erzeugte, erhabene Markierung 1 in Form einer Seriennummer auf dem Außenmantel eines Quarzglasrohres 2. Das Quarzglasrohr 2 ist als Reaktor für den Einsatz in der Solarzellenfertigung (Photovoltaik) vorgesehen. Die Markierung wird erzeugt, indem eine Folie, aus der die Seriennummer ausgestanzt ist, auf die Außenmantel-Oberfläche aufgelegt wird. Auf diese Maske wird von der oben beschriebenen SiO₂-Suspension mittels einer üblichen Sprühflasche aufgesprüht, bis eine gleichmäßige Schichtdicke erreicht ist, die etwa der Foliendicke entspricht (0,2 mm).

Nach einem 10-minütigen Vortrocknen an Luft wird die Folie abgelöst, so dass ein aus porösem SiO₂ bestehendes Muster (Grünkörperschicht) in Form der Seriennummer freigelegt wird. Die Grünkörperschicht wird weitere 6 Stunden lang an Luft getrocknet. Die vollständige Trocknung erfolgt unter Einsatz eines IR-Strahlers. Die getrocknete Grünkörperschicht ist rissfrei und hat eine mittlere Dicke von etwa 0,17 mm. Sie wird abschließend mittels eines Knallgasbrenners bei einer Temperatur von etwa 1500 °C zu der vollständig transparenten Markierung 1 verglast.

Auf diese Art und Weise können auf Bauteilen aus Quarzglas erhabene Markierungen mit einheitlichem Erscheinungsbild reproduzierbar hergestellt werden.

## Patentansprüche

1. Verfahren zur Herstellung einer erhabenen Markierung auf einem Glasgegenstand, indem eine SiO₂-Teilchen enthaltende Suspension auf einer Oberfläche des Glasgegenstandes als Muster aufgetragen, und das Muster unter Bildung der Markierung verdichtet wird, **dadurch gekennzeichnet, dass** zur Erzeugung einer Markierung auf einem Quarzglas-Gegenstand eine bindemittelfreie Suspension eingesetzt wird, die eine Dispersionsflüssigkeit und amorphe SiO₂-Teilchen mit Teilchengrößen bis maximal 500 µm enthält, davon zwischen 0,2 Gew.-% und 15 Gew.-% SiO₂-Nanoteilchen mit Teilchengrößen von weniger als 100 nm, und deren aus dem Gewichtsanteil der SiO₂-Teilchen und dem der SiO₂-Nanoteilchen zusammen bestehender Feststoffgehalt im Bereich zwischen 60 und 90 % liegt.

2. Verfahren nach Anspruch 1, **dadurch gekennzeichnet, dass** die Suspension durch Aufsprühen oder Aufstreichen aufgetragen wird.

3. Verfahren nach Anspruch 1 oder 2, **dadurch gekennzeichnet, dass** die Suspension SiO₂-Nanoteilchen im Bereich zwischen 0,5 und 5 Gew.-%, bevorzugt zwischen 1 und 3 Gew.-%, bezogen auf den gesamten Feststoffgehalt, enthält.

4. Verfahren nach einem der vorhergehenden Ansprüche, **dadurch gekennzeichnet, dass** die Markierung in Bezug auf den Quarzglas-Gegenstand aus arteigenem Material besteht.

5. Verfahren nach einem der vorhergehenden Ansprüche, **dadurch gekennzeichnet, dass** das Verdichten des Musters bei einer Temperatur im Bereich zwischen 1100 °C und 1600 °C, vorzugsweise unterhalb von 1450 °C erfolgt.

6. Verfahren nach einem der Ansprüche 1 bis 4, **dadurch gekennzeichnet, dass** das Verdichten des Musters bei einer Temperatur oberhalb von 1600 °C erfolgt.

7. Verfahren nach einem der vorhergehenden Ansprüche, **dadurch gekennzeichnet, dass** das Auftragen der Suspension über eine das Muster vorgebenden Maske erfolgt, die auf der Oberfläche aufgelegt wird.

8. Verfahren nach einem der vorhergehenden Ansprüche, **dadurch gekennzeichnet, dass** eine Markierung mit einer Schichtdicke im Bereich zwischen 0,1 und 0,5 mm erzeugt wird.

9. Verfahren nach einem der vorhergehenden Ansprüche, **dadurch gekennzeichnet, dass** SiO₂-Teilchen mit Teilchengrößen im Bereich zwischen 1 µm und 60 µm den größten Volumenanteil ausmachen, wobei die SiO₂-Teilchen eine mehrmodale Teilchengrößenverteilung mit einem ersten Maximum der Größenverteilung im Bereich von 1 bis 5 µm und einem zweiten Maximum im Bereich von 5 bis 50 µm aufweisen.

10. Verfahren nach einem der vorhergehenden Ansprüche, **dadurch gekennzeichnet, dass** die Suspension einen Feststoffgehalt im Bereich zwischen 70 und 80 Gew.-% aufweist.

11. Verfahren nach einem der vorhergehenden Ansprüche, **dadurch gekennzeichnet, dass** mindestens 80 Gew.-%, vorzugsweise mindestens 90 Gew.-% der SiO₂-Teilchen sphärisch ausgebildet sind.

12. Verfahren nach einem der vorhergehenden Ansprüche, **dadurch gekennzeichnet, dass** die SiO₂-Teilchen eine Teilchengrößenverteilung aufweisen, die durch einen D₅₀-Wert von weniger als 50 µm, vorzugsweise weniger als 40 µm, gekennzeichnet ist.

13. Verfahren nach einem der vorhergehenden Ansprüche, **dadurch gekennzeichnet, dass** als Dispersionsflüssigkeit ein Gemisch aus Wasser und einem organischen Lösungsmittel, vorzugsweise auf alkoholischer Basis, eingesetzt wird.

14. Verfahren nach einem der vorhergehenden Ansprüche, **dadurch gekennzeichnet, dass** die SiO₂-Teilchen aus natürlich vorkommendem Rohstoff und die SiO₂-Nanoteilchen aus synthetischem SiO₂ bestehen.

15. Verfahren nach einem der vorhergehenden Ansprüche, **dadurch gekennzeichnet, dass** der SiO₂-Gehalt der amorphen SiO₂-Teilchen mindestens 99,9 Gew.-% beträgt.

## Claims

1. A method for producing a raised marking on a glass object in that a suspension containing SiO₂ particles is applied to a surface of the glass object as a pattern, the pattern is compacted to form the marking, **characterized in that** the suspension used to create the marking on the quartz glass object is a binder-free suspension, said suspension containing a dispersion liquid and amorphous SiO₂ particles having particle sizes of up to a maximum of 500 µm, wherein said SiO₂ particles comprise between 0.2% by wt. and 15% by wt. SiO₂ nanoparticles having particle sizes of less than 100 nm, and the solids content of the suspension, i.e. the weight proportion of the SiO₂ particles and of the SiO₂ nanoparticles together, is in the range between 60% and 90%.

2. The method according to claim 1, **characterized in that** the suspension is applied by spraying or dispersion coating.

3. The method according to claim 1, **characterized in that** SiO₂ nanoparticles are present in the range between 0.5% by wt. and 5% by wt., preferably between 1% by wt. and 3% by wt., based on the total solids content of said suspension.

4. The method according to any one of the preceding claims, **characterized in that** the marking is of similar material with respect to the quartz glass object.

5. The method according to any one of the preceding claims, **characterized in that** the pattern is compacted at a temperature ranging between 1100°C and 1600°C, preferably below 1450°C.

6. The method according to any one of claims 1 to 4, **characterized in that** the pattern is compacted at a temperature above 1600°C.

7. The method according to any one of the preceding claims, **characterized in that** the suspension is applied via a mask that predetermines the pattern and is placed on the surface.

8. The method according to any one of the preceding claims, **characterized in that** a marking is produced with a layer thickness in a range between 0.1 mm and 0.5 mm.

9. The method according to any one of the preceding claims, **characterized in that** SiO₂ particles with particle sizes in the range between 1 µm and 60 µm account for the greatest volume fraction, the SiO₂ particles having a multimodal particle size distribution with a first maximum of the size distribution in a range of 1 µm to 5 µm and with a second maximum in a range of 5 µm to 50 µm.

10. The method according to any one of the preceding claims, **characterized in that** the suspension has a solids content in a range between 70% by wt. and 80% by wt.

11. The method according to any one of the preceding claims, **characterized in that** at least 80% by wt., preferably at least 90% by wt., of the SiO₂ particles are spherical.

12. The method according to any one of the preceding claims, **characterized in that** the SiO₂ particles have a particle size distribution that has a D₅₀ value of less than 50 µm, preferably of less than 40 µm.

13. The method according to any one of the preceding claims, **characterized in that** the dispersion liquid is a mixture of water and of an organic solvent, preferably based on alcohol.

14. The method according to any one of the preceding claims, **characterized in that** the SiO₂ particles consist of naturally occurring raw material and the SiO₂ nanoparticles consist of synthetic SiO₂.

15. The method according to any one of the preceding claims, **characterized in that** the SiO₂ content of the amorphous SiO₂ particles is at least 99.9% by wt.

## Revendications

1. Procédé pour la fabrication d'un marquage en relief sur un objet en verre, dans le fait qu'une suspension contenant des particules de SiO₂ est appliquée sur une surface de l'objet en verre en tant que modèle et le modèle est densifié en formant le marquage, **caractérisé en ce que** pour la génération du marquage sur un objet en verre de quartz, il est utilisé une suspension sans liant qui contient un liquide de dispersion et des particules de SiO₂ amorphes de taille maximale de 500 µm, constituées entre 0,2 % en poids et 15 % en poids de nanoparticules de SiO₂ de taille inférieure à 100 nm et dont la teneur en solide se composant de la part pondérale des particules de SiO₂ et de la part pondérale des nanoparticules de SiO₂ est comprise entre 60 et 90 %.

2. Procédé selon la revendication 1, **caractérisé en ce que** la suspension est appliquée par pulvérisation ou par étalement.

3. Procédé selon la revendication 1 ou 2, **caractérisé en ce que** la suspension contient des nanoparticules de SiO₂ entre 0,5 et 5 % en poids de préférence entre 1 et 3 % en poids par rapport à la teneur en solide totale.

4. Procédé selon l'une des revendications précédentes, **caractérisé en ce que** le marquage se compose d'un matériau caractéristique vis-à-vis l'objet en verre de quartz.

5. Procédé selon l'une des revendications précédentes, **caractérisé en ce que** la densification du modèle s'effectue à une température comprise entre 1100° et 1600°C, de préférence inférieure à 1450°C.

6. Procédé selon l'une des revendications 1 à 4, **caractérisé en ce que** la densification du modèle s'effectue à une température supérieure à 1600°C.

7. Procédé selon l'une des revendications précédentes, **caractérisé en ce que** l'application de la suspension s'effectue par un masque prédéterminant le modèle qui est appliqué sur la surface.

8. Procédé selon l'une des revendications précédentes, **caractérisé en ce qu'**un marquage d'une épaisseur de couche comprise entre 0,1 et 0,5 mm est généré.

9. Procédé selon l'une des revendications précédentes, **caractérisée en ce que** des particules de SiO₂ de taille comprise entre 1 µm et 60 µm représentent la plus grande part en volume, les particules de SiO₂ présentant une répartition multimodale des particules avec un premier maximum de répartition compris entre 1 et 5 µm et un second maximum compris entre 5 et 50 µm.

10. Procédé selon l'une des revendications précédentes, **caractérisé en ce que** la suspension présente une teneur en solide comprise entre 70 et 80 % en poids.

11. Procédé selon l'une des revendications précédentes, **caractérisé en ce qu'**au moins 80 % en poids, de préférence au moins 90 % en poids des particules de SiO₂ ont une forme sphérique.

12. Procédé selon l'une des revendications précédentes, **caractérisé en ce que** les particules de SiO₂ présentent une répartition de la taille des particules qui est **caractérisée par** une valeur D₅₀ inférieure à 50 µm de préférence inférieure à 40 µm.

13. Procédé selon l'une des revendications précédentes, **caractérisée en ce qu'**en tant que liquide de dispersion, il est utilisé un mélange d'eau et d'un solvant organique, de préférence à base d'alcool.

14. Procédé selon l'une des revendications précédentes, **caractérisée en ce que** les particules de SiO₂ se composent de matière première naturelle et les nanoparticules de SiO₂ de SiO₂ synthétique.

15. Procédé selon l'une des revendications précédentes, **caractérisée en ce que** la teneur en SiO₂ des particules amorphes de SiO₂ s'élève au moins à 99,9 % en poids.
